# EUROPÄISCHE PATENTSCHRIFT

(11) **EP 2 089 251 B1**
(45) Veröffentlichungstag und Bekanntmachung des Hinweises auf die Patenterteilung: **15.02.2012**
(21) Anmeldenummer: 07822005.0
(22) Anmeldetag: 30.10.2007
(51) Int. Cl.: B60R 13/08

(54) **MOTORABDECKUNG MIT SCHAUM ALS FUSSGÄNGERSCHUTZ**
ENGINE COVER WITH FOAM AS PEDESTRIAN PROTECTION
ÉLÉMENT DE RECOUVREMENT DE MOTEUR AVEC DE LA MOUSSE COMME PROTECTION POUR LES PIÉTONS

(30) Priorität: 08.11.2006 DE 102006052900
(43) Veröffentlichungstag der Anmeldung: 19.08.2009
(73) Patentinhaber: Polytec Riesselmann GmbH & Co. KG, 49393 Lohne (DE)
(72) Erfinder: ESDERS, Helen, 49393 Lohne (DE); ROLFES, Antonius, 49393 Lohne (DE); KISSNER, Matthias, 49393 Lohne (DE); SOARES, Jorge, 49393 Wettringen (DE); NIEBERDING, Peter, DAMME 49401 (DE)
(74) Vertreter: von Kreisler Selting Werner
(86) Internationale Anmeldenummer: PCT/EP2007/061651
(87) Internationale Veröffentlichungsnummer: WO 2008/055806

(56) Entgegenhaltungen:
- EP-A- 1 350 679
- WO-A-2004/090307
- DE-A1- 4 041 388
- DE-A1- 10 121 683
- DE-A1- 10 314 220
- DE-A1-102005 013 311

## Beschreibung

Die Erfindung bezieht sich auf ein schallabsorbierendes Bauteil zur Abdeckung von Aggregaten im Motorraum von Fahrzeugen, insbesondere Motorabdeckungen.

Es ist bereits bekannt, zur Dämpfung von Vibrationen und Absorbierung des Schalls von Motoren, Abdeckungen einzusetzen, die zusätzlich noch eine Designfunktion haben.

Üblicherweise bestehen diese Motorabdeckungen aus einem Kunststoffbauteil, das die Designfläche bildet, diese kann lackiert, einfarbig, mehrfarbig, einteilig, mehrteilig sein oder ein Designteil wie beispielsweise ein Emblem enthalten. Optimalerweise findet die Befestigung am Motor entkoppelt statt. Hierzu gibt es die unterschiedlichsten Varianten, beispielsweise über Schrauben mit Hülse und Elastomer oder Kugelkopf mit Elastomeraufnahme, hierbei kann der Kugelkopf entweder am Motor und das Elastomer an der Abdeckung aufgenommen werden oder umgekehrt.

Weiterhin kann die Abdeckung einen Schallabsorber beinhalten, welcher an der Abdeckung zum Beispiel verknüpft, verschweißt, verklebt oder angeschäumt werden kann.

Diese Schäume können beispielsweise ein Schnittschaum aus Polyurethan oder Melaminharz sein oder ein Formschaum aus Polyurethan. Bei dieser Erfindung wird in jedem Fall ein Formschaum verwendet, vorzugsweise aus Polyurethan. Teile der hier beschriebenen Ausführungsbeispiele beruhen auf dem Gebrauchsmuster DE 20 2006 010 129 U1, ebenfalls von der Anmelderin hinterlegt.

Aus der DE 101 21 683 A1 ist eine Designabdeckung für Komponenten im Motorraum eines Fahrzeuges bekannt. Die Offenlegungsschrift betrifft eine Designabdeckung für Komponenten im Motorraum eines Fahrzeugs, mit einem Verbund aus einer steifen Trägerschicht und einer Schaumstoffschicht zur Absorption von Schallwellen. Sie löst die Aufgabe, eine derartige Designabdeckung so zu gestalten, dass mit dieser die Erfüllung der Forderung nach einem ausreichenden Deformationsweg der Fronthaube auf einfache Weise unterstützt wird. Dazu ist eine Trägerschicht komponentenseitig angeordnet und weist Löcher oder Ausnehmungen auf, und eine Schaumstoffschicht ist auf der der jeweiligen Komponente abgewandten Seite angeordnet und auf dieser Seite mit einer dünnen Designschicht versehen. Darüber hinaus können sich an der Abdeckung ein oder mehrere Kopplungsbauteile zum Koppeln der Abdeckung an ein motorseitiges Anschlussstück befinden. Kennzeichnend im Falle mehrerer Kopplungsbauteile ist, dass diese nie unabhängig voneinander an der Abdeckung angebracht sind, sondern immer entweder durch eine (starre) Trägerstruktur und/oder eine (starre) Dekorschicht miteinander in Verbindung stehen.

Aus der DE 103 14 220 A1 ist ebenfalls bekannt, dass ein Schaum über eine Trägerstruktur geschäumt wird, welche die Aufnahmen für die Verbindungselemente zwischen Motor und Abdeckung beinhalten. Durch Richtlinien des Europäischen Parlamentes wie beispielsweise der Richtlinie 2003/102/EG werden aber auch Anforderungen an den Fußgängerschutz gestellt, die der Automobilhersteller erfüllen muss, um eine Typgenehmigung für sein Fahrzeug zu erhalten.

Dies führt zu Bauraumproblemen. Harte Komponenten wie Kunststoffbauteile dürfen den so genannten Fußgängerschutzraum nicht verletzen. Um allen Anforderungen gerecht zu werden, darf der Fußgängerschutzraum nur derart verletzt werden, dass bei einem Stoß wie bei einem Aufprall eines ungeschützten Verkehrsteilnehmers, das Bauteil durch Nachgeben oder Verformung unter die Fußgängerschutzlinie zurückgedrückt wird.

Die Aufgabe dieser Erfindung ist es, sowohl die akustischen und designtechnischen Anforderungen als auch die Anforderungen an den Fußgängerschutz zu erfüllen.

Dies wird bei dieser Erfindung dadurch realisiert, dass die gesamte Designfläche nicht wie üblicherweise durch ein Kunststoffteil gebildet wird, sondern durch einen Schaumstoffkörper, der gleichzeitig den Schallabsorber bildet. Die Designfläche kann optisch beispielsweise durch eine hinterschäumte tiefgezogene Folie, unter Umständen mit integriertem Emblem, oder durch eine Oberflächenbehandlung des Schaumstoffkörpers durch zum Beispiel mit InMoldCoating (IMC) oder PUR Sprayskin oder einer PUR - Gießhaut aufgewertet werden.

Eine erste Ausführungsform der vorliegenden Erfindung betrifft eine mehrschichtige Abdeckung von Aggregaten im Motorraum eines Kraftfahrzeuges umfassend wenigstens einen einen Schallabsorber bildenden Schaumstoffkörper (1), der auf der den Aggregaten abgewandten Fläche wenigstens teilweise oder vollständig mit einem flächigen Oberflächenelement (2, 6, 7) versehen ist, wobei eine Mehrzahl von Elementen (9, 11) zur Befestigung der Abdeckung an dem Aggregat in den Schaumstoffkörper (1) jeweils als Einzelelement vom Schaumstoffkörper (1) umschlossen ist.

Ein Vorteil der vorliegenden Erfindung ist hier die Verhinderung einer Kostensteigerung für das Bauteil; im Gegenteil es wird eine Kostenreduzierung erreicht.

Der Vorteil der erfindungsgemäßen Bauweise ist in erster Linie, dass ein Bauteil geschaffen wird, welches so flexibel ist, dass es auch bei einer Bauraumüberschneidung mit dem Fußgängerschutzraum im Falle eines Aufpralls dem Fußgänger keinen zusätzlichen Schaden zufügt. Über die Dichte und Härte des Schaumstoffkörpers kann die Flexibilität eingestellt werden, so dass sie die Montage nicht behindert und trotzdem die Fußgängerschutzanforderungen erfüllt. Je nach Ansprüchen an die Kosten und das Design können hier verschiedene Möglichkeiten der Oberflächengüte erreicht werden. Abdeckungen für den gleichen Motor können hier beispielsweise für ein hochwertiges Fahrzeug mit einer Dekorfolie mit integriertem Emblem oder einer Gießhaut ausgestattet werden, für andere Fahrzeuge mit demselben Motor kann hier innerhalb des gleichen Werkzeuges eine kostengünstigere Variante mit einer Verhautung erzeugt werden.

Ein weiterer Vorteil ist eine Kostenreduzierung, die sowohl durch die Einsparung der Montage des Absorbers an die Kunststoffabdeckung erzielt werden kann als auch durch Verwendung von Aufnahmen für Entkopplungselemente bzw. Kugelköpfen als Gleichteile.

Die Erfindung kann überall dort verwendet werden, wo eine Designfläche und/oder eine Schallabsorption benötigt wird/werden, der Bauraum aber aufgrund des Fußgängerschutzes beschränkt ist. Abgesehen vom Fußgängerschutz kann die Erfindung aber auch zur Kosteneinsparung oder aus Designgründen Anwendung finden.

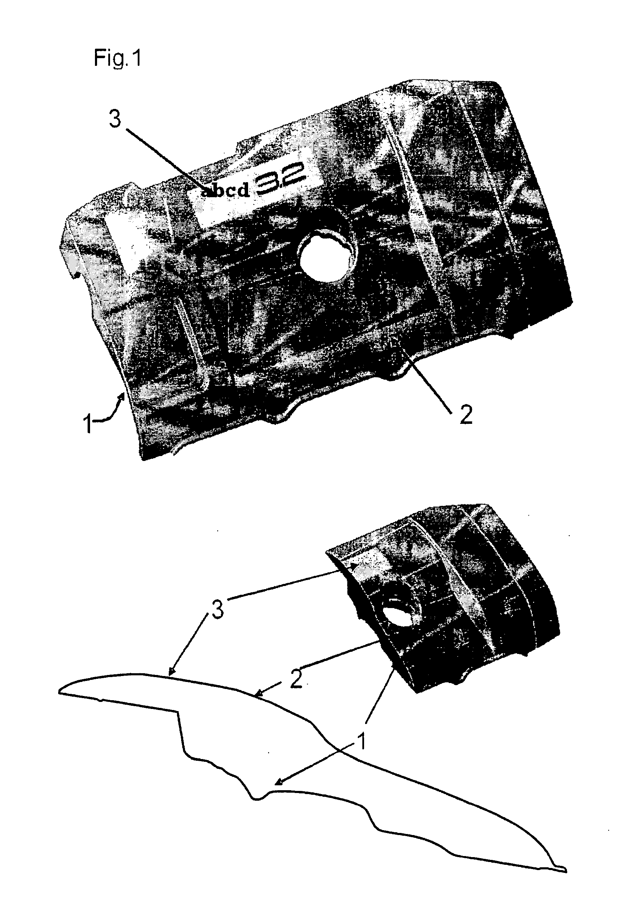

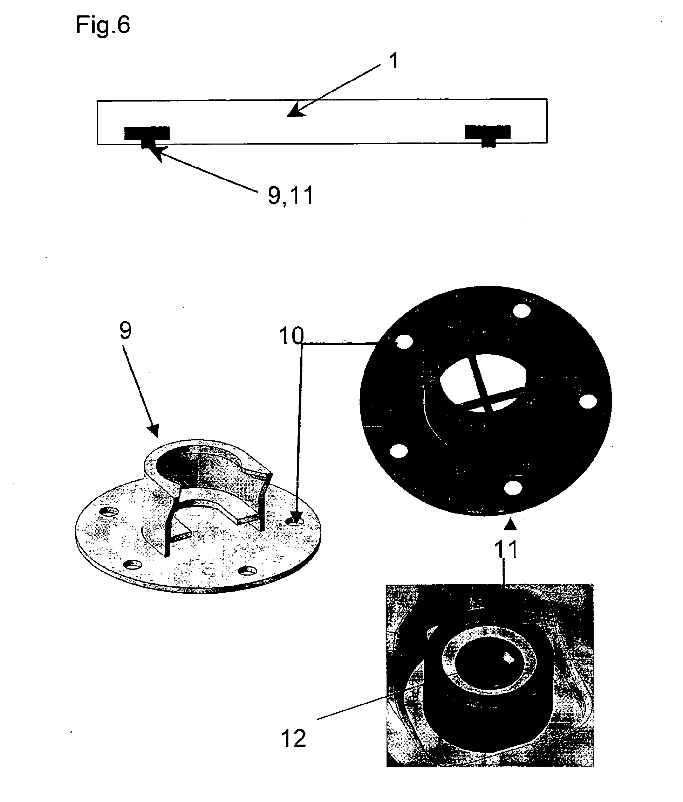

Die vorstehend genannten Aufgaben, Merkmale und Vorteile werden in den folgenden Ausführungsbeispielen und dazugehörigen Figuren verdeutlicht. Fig. 1 bis 5 zeigen Designmöglichkeiten der Oberfläche, während Fig. 6 bis 8 unterschiedliche Befestigungskonzepte zeigen. Die Designmöglichkeiten können beliebig mit unterschiedlichen Befestigungskonzepten kombiniert werden.

Fig. 1 besteht aus einem Schaumstoffkörper (1) vorzugsweise aus PUR, einer tiefgezogenen Folie als Oberflächenelement (2), die hinterschäumt ist. Die hier dargestellte erfindungsgemäße Motorabdeckung kann ein Emblem (oder ähnliche Designflächen) (3) enthalten, die entweder beispielsweise in das Oberflächenelement (2) integriert oder aufgeklebt sind.

Die Befestigung am Motor oder Motoraggregaten erfolgt durch eine der in Fig. 6 bis 8 beschriebenen Befestigungskonzepte.

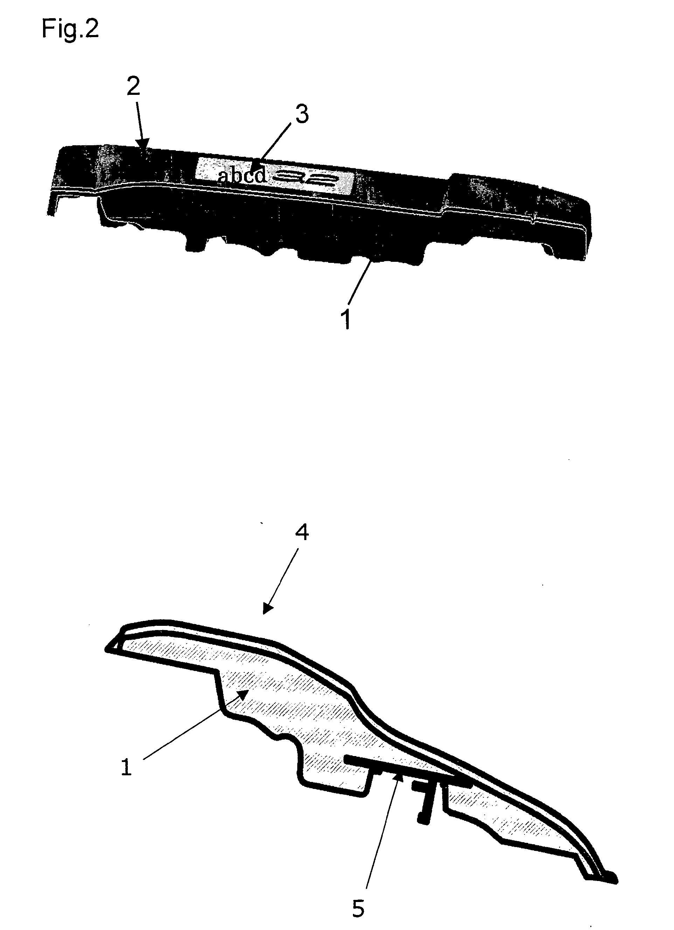

Fig. 2 zeigt einen Schnitt durch eine erfindungsgemäße Motorabdeckung. In diesem Schnitt ist ein Schaumstoffkörper (1) vorzugsweise aus PUR mit einer konstanten Dichte, insbesondere von 90 bis 180 kg/m³ und eine Designfläche (4), die entweder ein Sprayskin (Sprühhaut) oder eine Gießhaut umfasst, dargestellt. Die hier dargestellte Motorabdeckung kann ein Emblem (oder ähnliche Designflächen) (3) enthalten, das beispielsweise eingeklipst oder aufgeklebt wird.

Die Befestigung (5) am Motor oder an Motoraggregaten erfolgt durch eine der in Fig. 6 bis 8 beschriebenen Befestigungskonzepte.

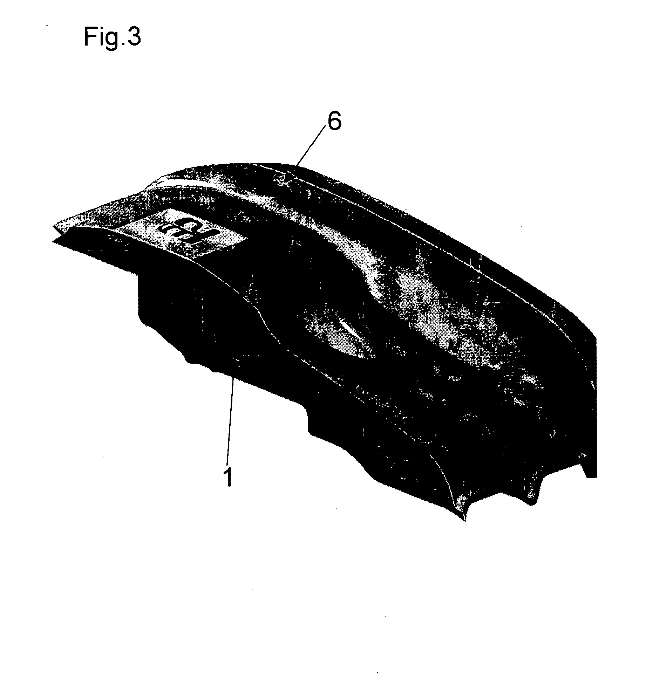

Fig. 3 zeigt einen Schnitt durch eine erfindungsgemäße Motorabdeckung. In diesem Schnitt ist ein Schaumstoffkörper (1) aus Integralschaum dargestellt. Die Oberfläche (6) des Schaumstoffkörpers (1) wird durch IMC eingefärbt, so dass eine angemessene Oberflächengüte erzielt werden kann.

Die Befestigung am Motor oder an Motoraggregaten erfolgt durch eine der in Fig. 6 bis 8 beschriebenen Befestigungskonzepte.

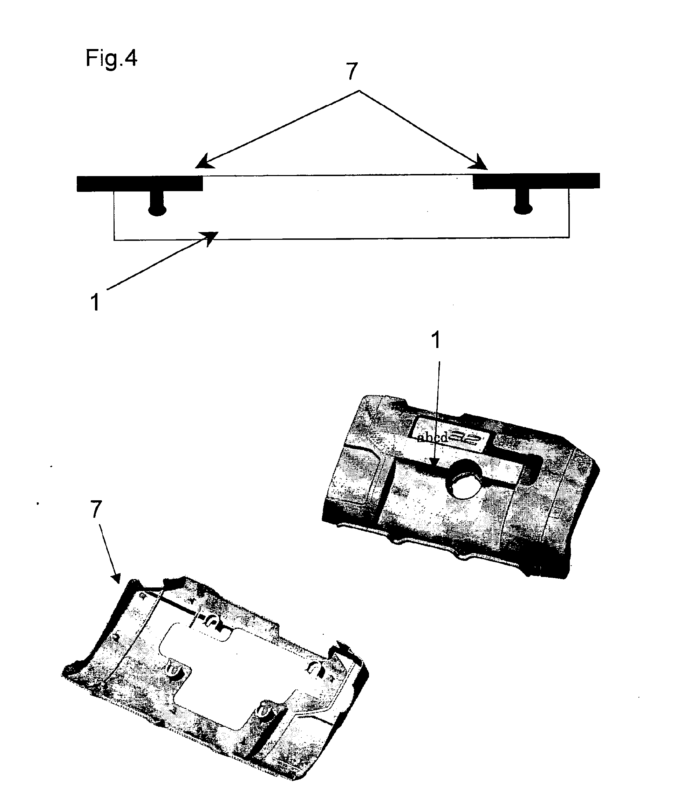

Fig. 4 zeigt eine weitere erfindungsgemäße Motorabdeckung. Hier wird eine Kunststoffabdeckung (7) als Kunststoffelement als Designteil eingesetzt, der Schaumstoffkörper (1) bildet nur an den kritischen Bereichen, wo der Fußgängerschutz überschritten wird die Sichtfläche als Designteil. Der Schaumstoffkörper (1) kann beispielsweise über Hinterschnitte an der Kunststoffabdeckung (7) befestigt oder aber angeschäumt werden.

Die Befestigung am Motor oder an Motoraggregaten kann durch ein aus dem Stand der Technik bekanntem oder aus einem der in Fig. 6 bis 8 beschriebenen Konzepte erfolgen.

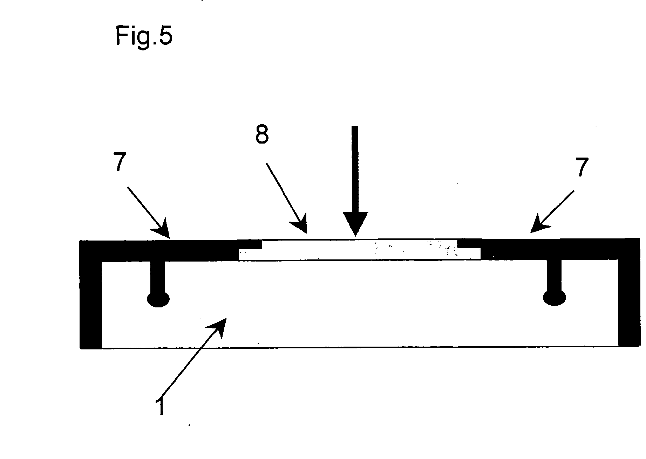

Fig. 5 zeigt das Prinzip einer aus Fig. 4 abgeleiteten Motorabdeckung. Eine Kunststoffabdeckung (7) bildet die Designfläche. Im kritischen Bereich bildet nicht der Schaumstoffkörper (1) die Sichtfläche, sondern ein weiteres Kunststoffteil (8), welches durch den Schaumstoffkörper (1) vom Rest der Kunststoffabdeckung (7) entkoppelt wird. Dieser Bereich wird durch Krafteinwirkung in Pfeilrichtung nach unten gedrückt, so dass dieser Teil den kritischen Fußgängerschutzbereich unterschreitet. Um Klappern zu verhindern kann zwischen den Kunststoffteilen (7,8) eine Weichkomponente aus Elastomer oder auch PUR eingebracht werden. Eine Alternative zu diesem Konzept wäre statt eines entkoppelten Bauteils eine Sollbruchstelle einzubringen, die bei einer definierten Krafteinwirkung bricht.

Fig. 6 zeigt ein Befestigungskonzept einer Motorabdeckung am Motor. Diese Befestigungselemente (9,11) beispielsweise aus Kunststoff werden als Einzelteile umschäumt. Die Bohrungen (10) dienen dem besseren Halt in dem Schaumstoffkörper. Bei diesem Konzept ist es denkbar bekannte Entkopplungselemente einzulegen oder aber über den Schaumstoffkörper (1) entsprechende Elemente wie beispielsweise Kugelköpfe (12) aufzunehmen. Hierzu füllt der Schaumstoffkörper (1) auch den Bereich aus, der den Kugelkopf aufnimmt (12). Das Kunststoffteil dient hier in erster Linie dazu die Bewegungsfreiheit des Kugelkopfes innerhalb des Schaumstoffkörpers zu begrenzen. Auch eine Aufnahme ohne Kunststoffteile nur über den Schaumstoffkörper ist denkbar, wenn die Festigkeit des Schaumstoffkörpers (1) dieses unterstützt. Hierbei ist erforderlich, dass der Schaumstoffkörper (1) eine Shore Härte A von mindestens 50 aufweist. Wird dieser Wert unterschritten, so wird kein ausreichender Halt der Abdeckung am Motor oder an den Aggregaten geboten.

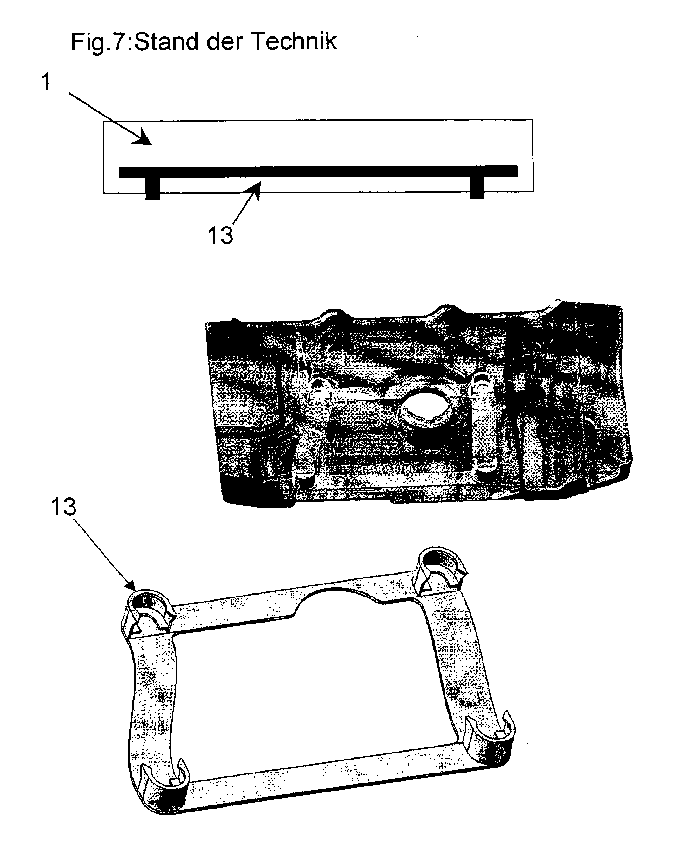

Fig. 7 zeigt eine Befestigungsmethode des Standes der Technik (DE 103 14 220 A1) über eine Trägerstruktur (13), welche eingeschäumt wird.

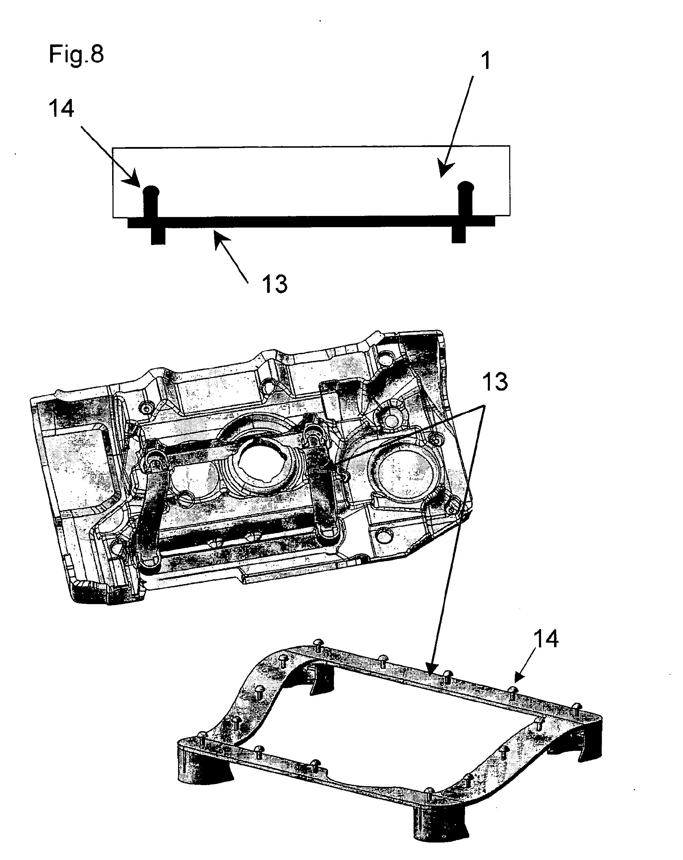

Fig. 8 zeigt ein erfindungsgemäßes Konzept einer gegenüber Fig. 7 verbesserten Ausführungsform. Um eine verbesserte Recyclingfähigkeit zu gewährleisten, wird die Trägerstruktur (13) nicht eingeschäumt, sondern über Hinterschnitte (14) unter den Schaumstoffkörper (1) geklipst. Die Befestigungsgeometrie zum Motor hin, befindet sich auf dieser Trägerstruktur. Weiterhin kann die Trägerstruktur (13) so ausgelegt sein, dass sie den Schaumstoffkörper (1) in seiner Stabilität unterstützt.

## Patentansprüche

1. Mehrschichtige Abdeckung von Aggregaten im Motorraum eines Kraftfahrzeuges umfassend wenigstens einen Schallabsorber bildenden Formschaumstoffkörper (1), der auf der den Aggregaten abgewandten Fläche wenigstens teilweise oder vollständig mit einem Kunststoffelement (7) versehen ist, das ein Kunststoffteil (8) umfasst, welches durch den Schaumstoffkörper (1) von dem Kunststoffelement (7) entkoppelt ist, wodurch dieser Bereich durch Krafteinwirkung nach unten gedrückt wird und so einen kritischen Fußgängerschutzbereich unterschreitet, wobei eine Mehrzahl von Elementen (9, 11) unabhängig voneinander zur Befestigung der Abdeckung an dem Aggregat in den Schaumstoffkörper (1) jeweils als Einzelelement vom Schaumstoffkörper (1) umschlossen ist.

2. Abdeckung nach Anspruch 1, **dadurch gekennzeichnet, dass** der Formschaum eine Dichte von 150 bis 350 kg/m³ umfasst.

3. Abdeckung nach Anspruch 1 oder 2, **dadurch gekennzeichnet, dass** der Schaumstoffkörper (1) Polyurethanschaum umfasst.

4. Abdeckung nach einem der Ansprüche 1 bis 3, **dadurch gekennzeichnet, dass** das Kunststoffelement (7) die den Aggregaten abgewandte Oberfläche des Schaumstoffkörpers (1) teilweise abdeckt und durch
(a) Hinterschnitte mit dem Schaumstoffkörper (1) oder
(b) Anschäumen verbunden ist.

5. Abdeckung nach Anspruch 1, **dadurch gekennzeichnet, dass** das Kunststoffelement (7) und das Kunststoffteil (8) durch eine elastische Weichkomponente entkoppelt sind.

6. Abdeckung nach einem der Ansprüche 1 bis **5, dadurch gekennzeichnet, dass** das Oberflächenelement **(2)** eine Designfläche (3, 4) aufweist.

7. Abdeckung nach einem der Ansprüche 1 bis **6, dadurch gekennzeichnet, dass** die Befestigungselemente (9, 11)
(a) umschäumt sind,
(b) allein oder in Form einer Trägerstruktur (13) formschlüssig in den Schaumstoffkörper (1) durch Hinterschnitte (14) integriert sind und/oder
(c) integraler Bestandteil des Schaumstoffkörpers sind, sofern die Shore Härte A des Schaumstoffkörpers mindestens zu 50 beträgt.

8. Abdeckung nach einem der Ansprüche 1 bis **7, dadurch gekennzeichnet, dass** die Befestigungselemente (9, 11) Bohrungen (10) zur Durchdringung des Schaumstoffkörpers (1) aufweisen.

## Claims

1. A multilayer cover for units in the engine compartment of a motor vehicle comprising at least one foam body (1) forming a sound absorber, wherein the foam body is provided, on the surface facing away from the units, at least partially or completely with a plastic element (7) comprising a plastic part (8) that is decoupled from the plastic element (7) by the foakm body (1), whereby this area is pushed downward by a force acting on it, thus moving below a critical pedestrian protection area, wherein a plurality of elements (9, 11) are independently from each other enclosed by the foam body (1) as individual elements for mounting the cover to the unit in the foam body (1).

2. The cover according to claim 1, **characterized in that** said molded foam has a density of from 150 to 350 kg/m³.

3. The cover according to claim 1 or 2, **characterized in that** said foam body (1) comprises polyurethane foam.

4. The cover according to any of claims 1 to 3, **characterized in that** said plastic element (7) partially covers the surface of the foam body (1) facing away from the units, and is attached to the foam body (1) by
(a) undercuts; or
(b) foaming.

5. The cover according to claim 1, **characterized in that** said plastic element (7) and said plastic part (8) are decoupled by an elastic soft component.

6. The cover according to any of claims 1 to 5, **characterized in that** said surface element (2) has a design area (3, 4).

7. The cover according to any of claims 1 to 6, **characterized in that** said attachment elements (9, 11)
(a) are embedded in foam;
(b) are integrated in the foam body (1) in a positive-locking manner by undercuts (14) alone or in the form of a support structure (13); and/or
(c) are integral parts of the foam body if the Shore A hardness of the foam body is at least 50.

8. The cover according to any of claims 1 to 7, **characterized in that** said attachment elements (9, 11) have bores (10) for penetrating the foam body (1).

## Revendications

1. Couverture multicouche pour couvrir des agrégats dans le compartiment moteur d'un véhicule à moteur, comprenant au moins une pièce de mousse moulée (1) formant un amortisseur de bruit muni, sur la surface opposée aux agrégats au moins partiellement ou entièrement, d'un élément en plastique (7) comportant une pièce en plastique (8) découplée de l'élément en plastique (7) par la pièce de mousse (1), qui a pour effet que cette région est poussée en bas par l'action d'une force, ainsi passant au-dessous d'une région protectrice des piétons critique, dans laquelle une pluralité d'éléments (9, 11) sont enfermés indépendamment l'un de l'autre par la pièce de mousse (1) en tant qu'élément individuel pour attacher la couverture à l'agrégat dans la pièce de mousse (1).

2. Couverture selon la revendication 1, **caractérisée en ce que** la mousse moulée a une densité de 150 à 350 kg/m³.

3. Couverture selon la revendication 1 ou 2, **caractérisée en ce que** la pièce de mousse (1) comporte une mousse de polyuréthane.

4. Couverture selon l'une quelconque des revendications 1 à 3, **caractérisée en ce que** l'élément en plastique (7) couvre partiellement la surface de la pièce de mousse (1) opposée aux agrégats et est lié avec la pièce de mousse (1) par
(a) des contre-dépouilles ; ou
(b) liaison par moussage.

5. Couverture selon la revendication 1, **caractérisée en ce que** ledit élément en plastique (7) et ladite pièce en plastique (8) sont découplés par un composant élastique souple.

6. Couverture selon l'une quelconque des revendications 1 à 5, **caractérisée en ce que** l'élément de surface (2) présente une région de dessin (3, 4).

7. Couverture selon l'une quelconque des revendications 1 à 6, **caractérisée en ce que** les éléments de fixation (9, 11)
(a) sont enrobés de mousse ;
(b) sont intégrés dans la pièce de mousse (1) par des contre-dépouilles (14) par engagement positif, seuls ou sous la forme d'une structure de soutien (13) ; et/ou
(c) font une partie intégrale de la pièce de mousse, à condition que la dureté Shore A de la pièce de mousse est au moins 50.

8. Couverture selon l'une quelconque des revendications 1 à 7, **caractérisée en ce que** les éléments de fixation (9, 11) présentent des perçages (10) pour pénétrer la pièce de mousse (1).
